# EUROPEAN PATENT SPECIFICATION

(11) **EP 4 054 386 B1**
(45) Date of publication and mention of the grant of the patent: **27.05.2026**
(21) Application number: 20884090.0
(22) Date of filing: 01.11.2020
(51) Int. Cl.: A47J 27/21, A47J 27/212, A47J 36/34, F21V 33/00

(54) **A KETTLE**
KESSEL
BOUILLOIRE

(30) Priority: 06.11.2019 AU 2019904178
(43) Date of publication of application: 14.09.2022
(73) Proprietor: Powa Corporation Pty Ltd, Bibra Lake, Western Australia 6163 (AU)
(72) Inventor: KHOURY, Edward Joseph, Bibra Lake, Western Australia 6163 (AU); KHOURY, Ross Stanley, Bibra Lake, Western Australia 6163 (AU)
(74) Representative: IPrime Bonnekamp Sparing Patentanwaltsgesellschaft mbH
(86) International application number: PCT/AU2020/051190
(87) International publication number: WO 2021/087555

(56) References cited:
- EP-A2- 1 253 679
- EP-B1- 1 294 260
- EP-B1- 2 750 559
- EP-B1- 2 750 559
- WO-A1-2011/029152
- WO-A1-2011/029152
- GB-A- 2 331 141
- JP-B2- 4 301 143
- JP-B2- 4 301 143
- US-B2- 9 609 975

## Description

### Technical Field

The present invention relates to a kettle for heating liquid, such as water.

### Background

Electric kettles are commonly used to heat or boil water without the necessity of a stove. They usually have a vessel with a spout and a handle that can be connected to a power base to activate a heating element within the vessel.

For some people, such as those suffering from arthritis in the hand or finger joints, it may be difficult to lift the vessel off the power base and pivot it to pour the hot water into a cup. It would therefore be advantageous if at least an embodiment of the present invention provided a kettle that overcame this problem or at least provided a workable alternative to conventional kettles.

GB 2 331 141 A shows a kettle for heating liquid, the kettle comprising a base comprising base connector pins with an electrical contact that is connectable to a power source via a cable and a vessel for holding the liquid and comprising a heating element for heating the liquid. The vessel is pivotable around a hinge connecting the vessel and the base, wherein a flexible pipe is provided to refill the vessel. When the vessel is pivoted around the base via hinge about a pivot axis, liquid in the vessel K flows through an opening located at a top portion of the vessel. When the vessel is pivoted down, the base connector pins engages with a vessel connector such that the electrical contacts of the base and the vessel can be connected to activate the heating element. The base connector pins and the vessel connector, when engaged, do not prevent a pivotal movement of vessel around the pivot axis.

EP 2 750 559 B1 shows a kettle for heating liquid, the kettle comprising a base comprising a base connector with an electrical contact that is arranged in a fixed position and is connectable to a power source, wherein the base is pivotable with respect to a lower portion. The kettle further comprises a vessel for holding the liquid and comprising a heating element for heating the liquid, wherein the vessel further comprises a vessel connector with an electrical contact connected to the heating element, the connectors abutting against each other. The vessel can be removed from the base, but when the vessel is introduced in the base, protrusions provided on the circumference of vessel engage into complementary bores of base such that base and vessel can only commonly be pivoted around lugs of slower portion defining axis. An opening is located at a top portion of the vessel.

Throughout the specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Summary

It is the object of the invention to provide an improved kettle. This object is achieved according to the invention by a kettle as defined in independent claim 1.

Embodiments of the present invention relate to a kettle for heating liquid, the kettle comprising:
a base comprising a base connector with an electrical contact that is connectable to a power source, the base connector of the base being movable between an engaged position and a disengaged position, and
a vessel for holding the liquid and comprising a heating element for heating the liquid, the vessel further comprising a vessel connector with an electrical contact connected to the heating element,
wherein the vessel is pivotably connected to the base such that by pivoting the vessel relative to the base, liquid in the vessel flows through an opening located at a top portion of the vessel, and
wherein the kettle is configured such that when the base connector of the base is in the engaged position, the base connector engages with the vessel connector such that the electrical contacts of the base and the vessel can be connected to activate the heating element, and when the base connector is in the disengaged position, the vessel is pivotable relative to the base for pouring the liquid through the opening of the vessel.
The kettle comprises a support frame configured to pivotably connect the vessel with the base. The support frame comprises first and second frame parts that are pivotable relative to each other about a pivot axis, wherein the first frame part is connected to the base and the second frame part is connected to the vessel.

The kettle in accordance with embodiments of the present invention has significant advantages. In particular, by providing the electrical contacts connectable to the power supply in the base, there is no or relatively little movement of the power cable when the vessel is pivoted. Furthermore, by providing a vessel that is pivotable to the base, liquid can be poured through the opening of the vessel without the need of lifting the vessel off the base.

According to the invention, the kettle is configured such that when the base connector is in the engaged position, pivotal movement of the vessel is restricted. For example, the vessel connector may comprise a receptacle for receiving the base connector such that pivotal movement of the vessel is restricted. This has the advantage that the risk of accidental pivoting of the vessel and therefore spilling of hot liquid can be reduced.

In an embodiment, the kettle is configured such that the base connector automatically returns to the engaged position. For example, the base connector may be spring-loaded to automatically return to the engaged position. The base may further comprise a damping element for slowing down the movement of the base connector from the disengaged position to the engaged position.

The kettle may be configured such that force needs to be applied to move the base connector from the engaged position to the disengaged position. This may be implemented mechanically or electronically. For example, the kettle may comprise a switch for moving the base connector from the engaged position to the disengaged position. Alternatively, the base may comprise a handle for facilitating to move the base connector from the engaged position to the disengaged position. In a specific embodiment, the handle may be in the form of a ring that extends around the base and that is connected to the base connector.

In a specific example, the base may comprise a magnet for holding the base connector in the disengaged position. In this regard, the kettle may comprise an activator for activating the magnet when the base connector is in the disengaged position. The activator may be configured to activate the magnet for a predefined period of time such that the base connector returns to the engaged position at the end of the predefined period of time. The predefined period of time may be between 5 seconds and 1 minute, or between 10 seconds and 45 seconds, or between 20 seconds and 30 seconds, or approximately 10 seconds, or approximately 20 seconds or approximately 30 seconds.

In an embodiment, the kettle comprises a motor for electrically moving the base connector between the disengaged position and the engaged position. In such embodiment, no force will be needed to move the base connector. Rather, switch or push button may be operated to activate the motor. The motor may be in connection with the based connector via one or more gears. Thus, by activating the motor, the gears rotate thereby moving the base connector between the engaged and disengaged positions. In one particular embodiment, the base connector is supported on a threaded shaft. A gear may be positioned to engage with the thread of the shaft. Thus, by rotating the gear, the shaft can be raised and lowered.

In order to activate the motor, the kettle may comprise at least one control element to facilitate input from a user. The at least one control element may be in the form of one or more push buttons, for example, arranged on a control panel. Alternatively, the at least one control element may be in the form of a touch screen. A person skilled in the art will appreciate that any suitable control element may be provided to facilitate input from a user. The kettle may be configured such that any suitable functions may be controlled using the at least one control element, including but not limited a timer, and a desired temperature of the liquid within the vessel. In this regard, the kettle may comprise a temperature sensor for detecting a temperature of liquid within the vessel.

The kettle may be configured such that the pivot axis extends through a central portion of the vessel. For example, the pivot axis may extend through a centre of gravity of the vessel.

Each frame part may comprise a base member and a pair of substantially opposite support members extending from the base member, wherein the pair of support members of the second frame part is pivotably connected to the pair of support members of the second frame part. Specifically, the second frame part may be pivotably moveable relative to the second frame part between a first position in which the base members of the first and second frame parts at least partly overlap and a second position in which the base member of the second frame part is spaced relative to the base member of the first frame part and the vessel is pivoted relative to the base.

In an embodiment, each base member of the first and second frame parts comprises an aperture that is adapted such that the base connector can move through the aperture. Specifically, when the second frame part is in the first position, the apertures of the base parts of the first and second frame parts align such that the base connector can move through the apertures to engage with the vessel connector.

In an embodiment, each base member of the first and second frame parts comprises a wall portion and the support frame is configured such that when the second frame part is in the first position, the wall portions of the first and second frame parts form a rim that at least partially encloses the vessel.

The support frame may be configured such that the vessel is removable from the support frame. This has the advantage that the vessel can be removed for cleaning purposes or to be filled with liquid. For example, the vessel may be connectable to the second frame part by a snap fit connection. Specifically, each support member of the second frame part may comprise a recess for receiving a protrusion located at an outside surface of the vessel.

In an example, the vessel has a substantially cylindrical shape. The vessel may comprise a lid for closing a relatively large opening at the top portion of the vessel. In this way, access to the inside of the vessel, for example for cleaning purposes, can be improved.

In an embodiment, the kettle has a central vertical axis and is configured such that the vessel is rotatable about the central axis relative to the base. This provides the advantage that liquid can be poured in different directions without the need for lifting the vessel off the base. In one embodiment, the vessel is rotatable about 360 degrees. However, a person skilled in the art will appreciate that a limited range of rotation is envisaged, including but not limited to 90 degrees, 180 degrees or 270 degrees. In a specific embodiment, the first frame part of the support frame is rotatable about the central axis relative to the base.

In an embodiment, the kettle may comprise a light source for emitting light of one or more wavelengths or wavelength ranges. In a specific example, a wavelength of the emitted light is selected based on a temperature of the liquid within the vessel. The light source may illuminate the liquid within the vessel. Additionally or alternatively, the light source may direct light onto at least one defined surface area in proximity of the base, wherein the at least one defined surface area is indicative of a position receiving liquid when the vessel is pivoted to pour liquid through the opening of the vessel. This is particularly advantageous if the kettle is rotatable about the central axis relative to the base.

In a specific embodiment, the vessel may comprise a light source for illuminating liquid within the vessel and a battery for powering the light source, wherein the kettle is configured such that when the base connector is in the disengaged position the light source can be powered by the battery.

The kettle may comprise an electrical switch for connecting the electrical contacts of the vessel and the base to activate the heating element in the vessel. The heating element of the vessel may be incorporated within a wall portion of the vessel, for example, the heating element may be welded into a steel plate at the bottom of the vessel. This has the advantage that build-up of sediments from the liquid, such as minerals, can be reduced.

The vessel typically comprises a handle for holding the vessel. In a specific embodiment, the handle is configured such that the vessel can be grasped from two directions. For example, the handle may comprise a first handle portion that extends across and over a top portion of the vessel, and a second handle portion that extends along a side portion of the vessel.

### Brief Description of Drawings

Certain exemplary embodiments of the present invention will now be described, by example only, with reference to the accompanying drawings in which:
Figure 1 is a side view of the kettle when the base connector is in the engaged position in accordance with an embodiment of the present invention;
Figure 2 is an isometric view of the kettle of Figure 1;
Figure 3 shows an exploded view of the kettle of Figure 1;
Figure 4 is a cross sectional side view of the kettle of Figure 1;
Figure 5 is a cross sectional front view of the kettle of Figure 1;
Figure 6 is a side view of the kettle of Figure 1 when the base connector is in the disengaged position;
Figure 7 is a side view of the kettle of Figure 6 when the vessel is pivoted;
Figure 8 is an isometric view of the kettle of Figure 6;
Figure 9 shows an exploded view of the kettle of Figure 6;
Figure 10 is a cross sectional side view of the kettle of Figure 6;
Figure 11 is a cross sectional front view of the kettle of Figure 6;
Figure 12 is a cross sectional side view of the kettle of Figure 6 when the vessel is pivoted,
Figure 13 shows a side view of a kettle in accordance with a further embodiment of the present invention when the base connector is in the engaged position;
Figure 14 shows an isometric view of a kettle in accordance with a further embodiment of the present invention;
Figure 15 shows a side view of the kettle of Figure 14;
Figure 16 shows an isometric view of a kettle in accordance with a further embodiment of the present invention;
Figure 17 shows a further isometric view of the kettle of Figure 16;
Figure 18 shows a side view of the kettle of Figure 16 when the vessel is pivoted;
Figure 19 shows a cross sectional side view of the kettle of Figure 16 when the base connector is in the engaged position;
Figure 20 shows a cross sectional side view of the kettle of Figure 16 when the base connector is in the disengaged position; and
Figure 21 shows a cross sectional side view of the kettle of Figure 16 when the base connector is in the disengaged position and the vessel is pivoted.

### Description of Embodiments

Embodiments of the present invention generally relate to a kettle for heating liquid, such as an electric kettle. The kettle comprises a base comprising a base connector with an electrical contact that is connectable to a power source, for example via a cable. The kettle further comprises a vessel for holding the liquid. The vessel comprises a heating element for heating the liquid and further comprises a vessel connector with an electrical contact connected to the heating element. The vessel is pivotably connected to the base such that by pivoting the vessel relative to the base, liquid can flow through an opening located at a top portion of the vessel, such as a spout.

The base connector of the base is movable between an engaged position and a disengaged position. When the base connector of the base is in the engaged position, the base connector engages with the vessel connector such that the electrical contacts of the base and the vessel can be connected to activate the heating element, for example by using an electric switch. Additionally, pivotal movement of the vessel may be restricted when the base connector is in the engaged position. This provides a safety feature as the risk of accidental pivoting of the vessel and therefore accidental spillage of hot liquid can be reduced or even avoided.

When the base connector is in the disengaged position, the vessel can be pivoted relative to the base to pour liquid through the opening of the vessel. In addition, the vessel may be rotatable relative to the base about a central vertical axis of the kettle. In this way, liquid can be poured in different directions which allows a user to fill multiple containers without the need to move the containers.

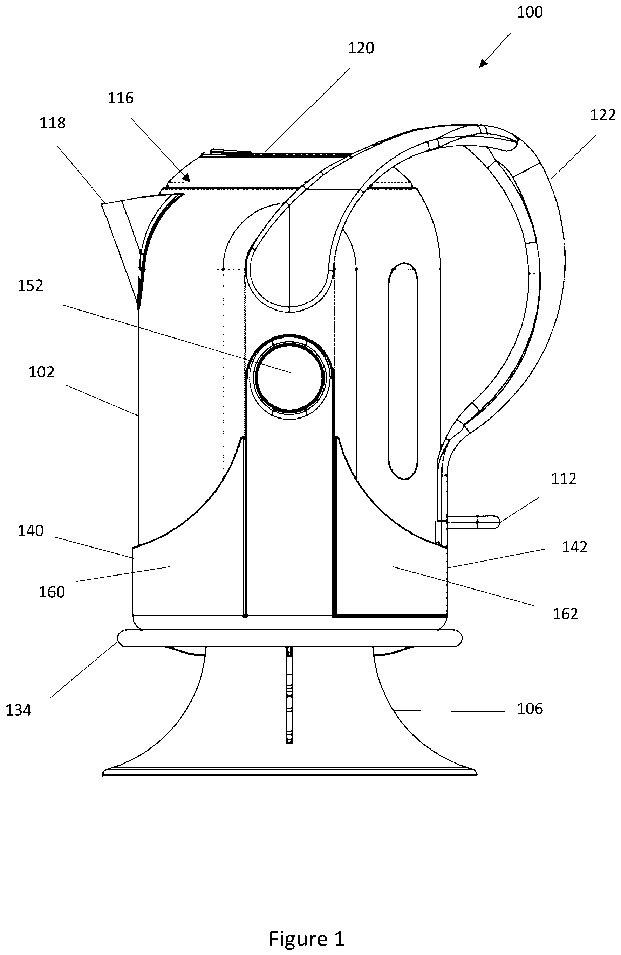

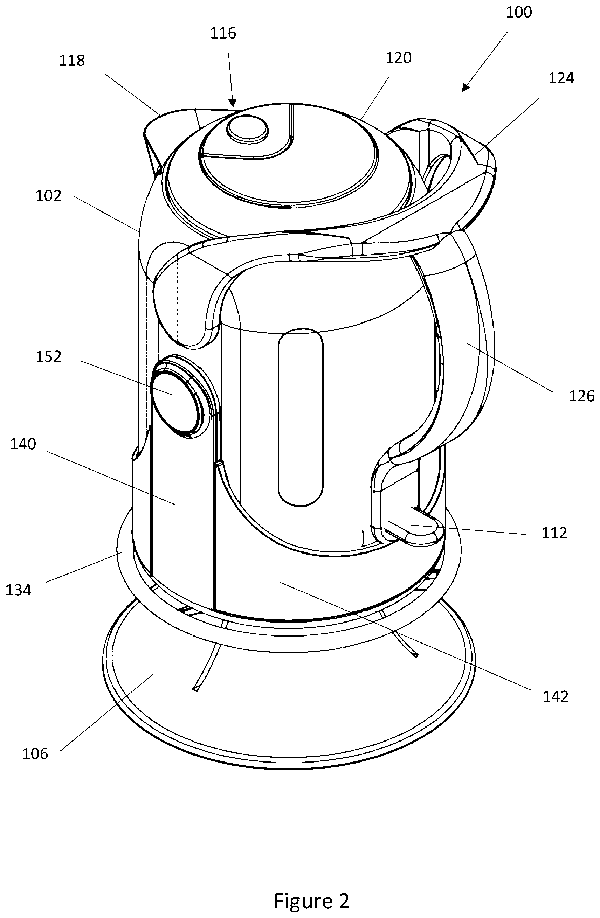

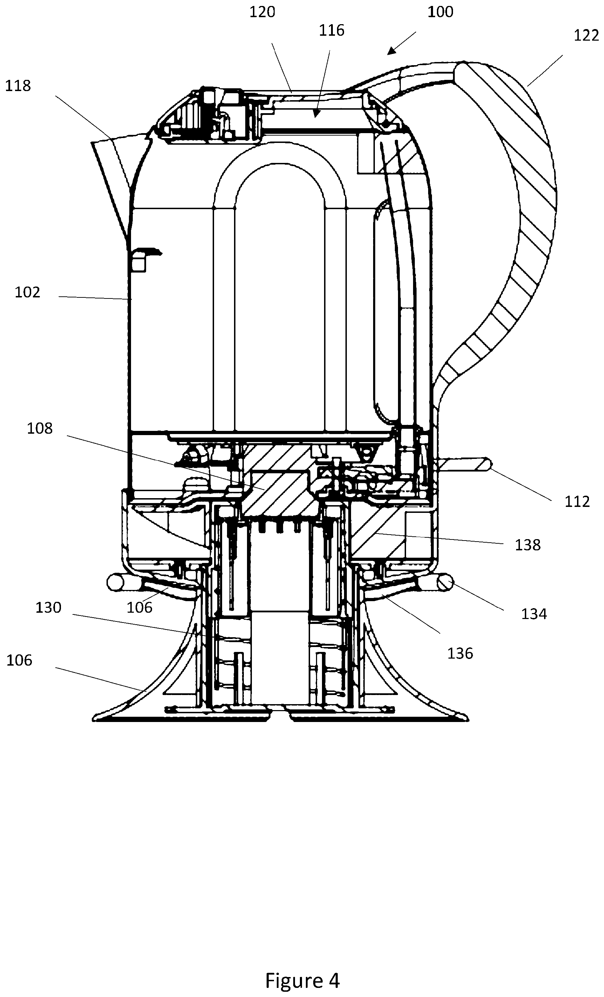

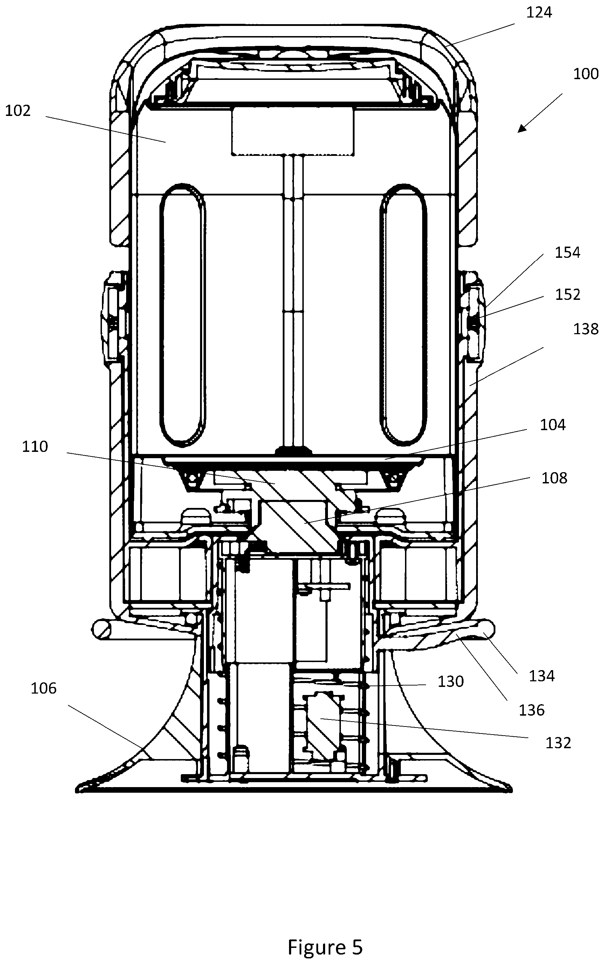

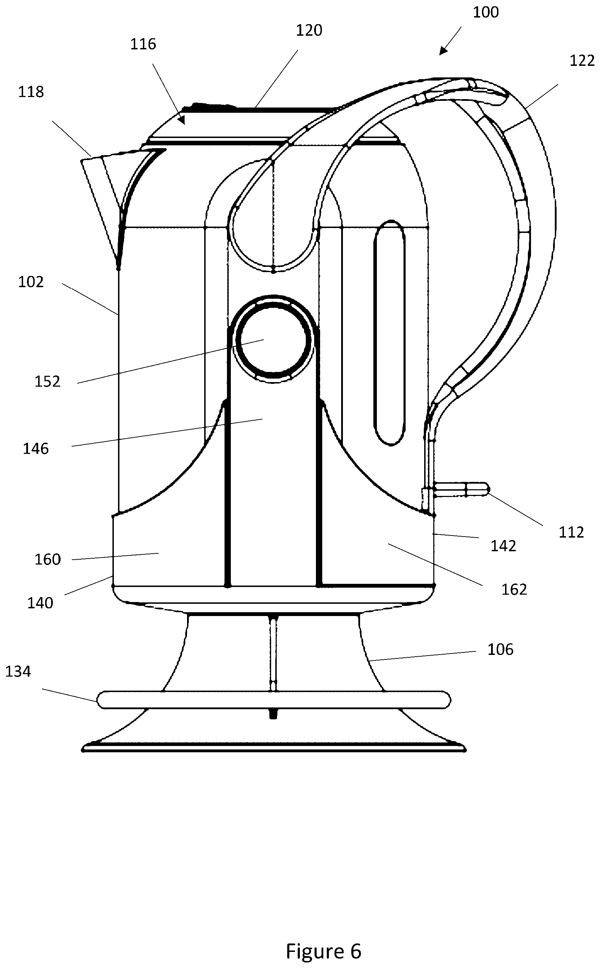

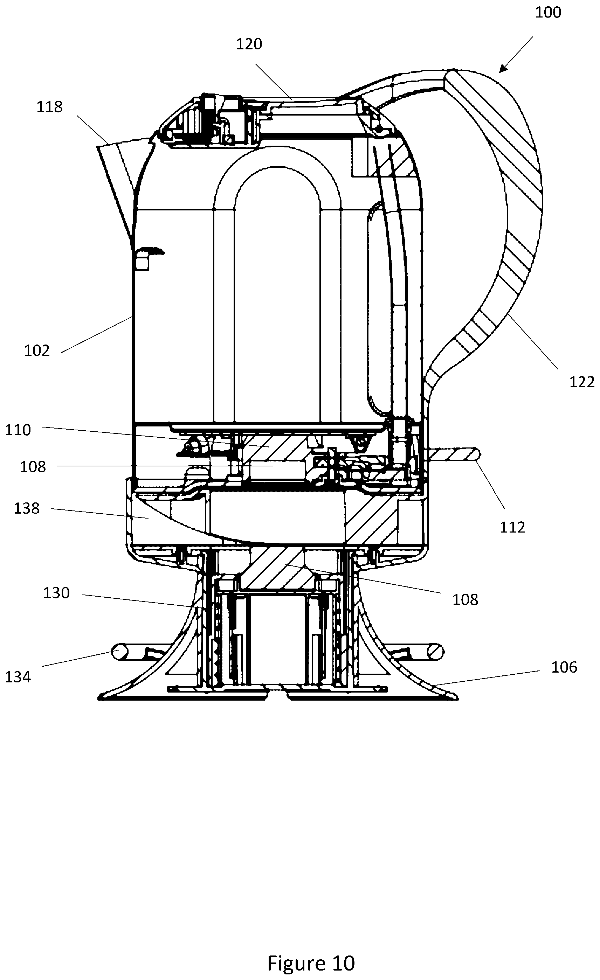

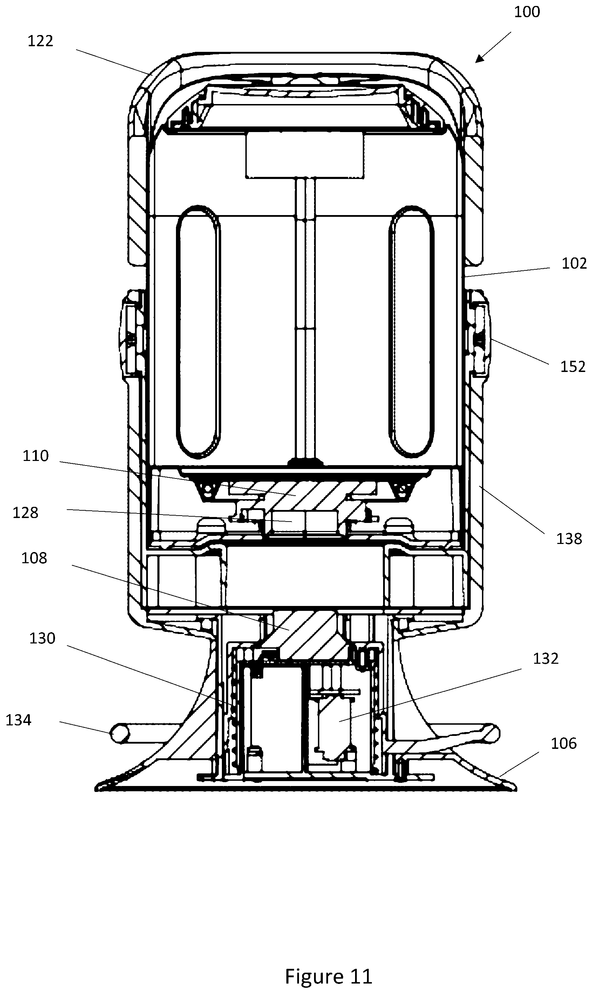

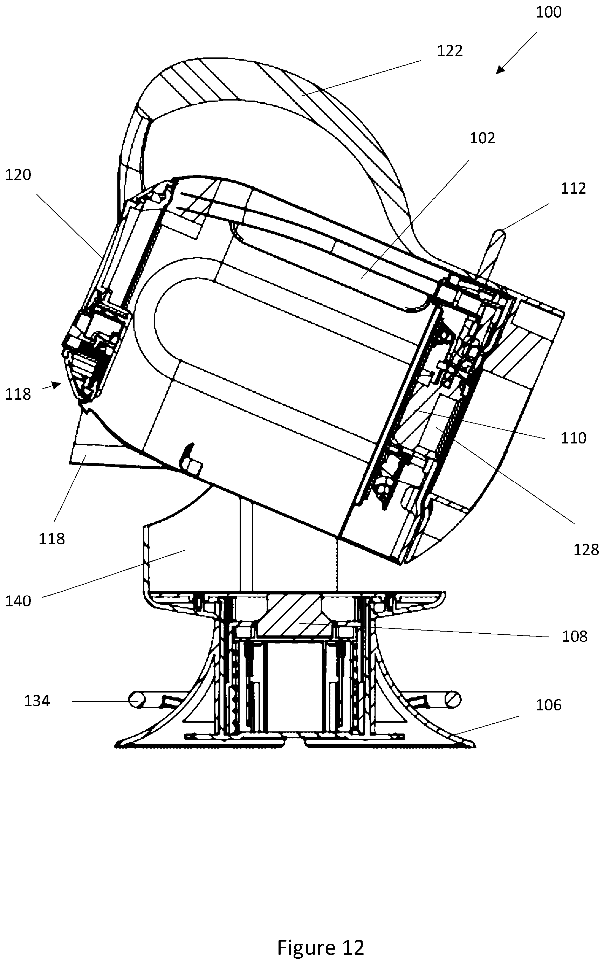

Referring now to the drawings, Figures 1 to 12 show schematic representations of a kettle in accordance with a first embodiment of the present invention. Figures 1 to 5 show the kettle with the base connector in the engaged position and Figures 6 to 12 show the kettle with the base connector in the disengaged position.

The kettle 100 in this example is an electric kettle for heating and/or boiling liquid, such as water. The kettle 100 comprises a vessel 102 for holding liquid and a heating element 104 for heating the liquid. In this example, the heating element 104 is fully enclosed within a steel plate at the bottom of the vessel 102. However, a person skilled in the art will appreciate that any suitable heating element is envisaged, including but not limited to a coil that is located within the vessel 102.

The kettle 100 further comprises a power base 106. The base 106 comprises a base connector 108 with an electrical contact that is connectable to a power source, for example via a cable (not shown). The vessel 102 also has a connector 110 with an electrical contact that is connected to the heating element 104. Thus, if the electrical contacts of the base connector 108 and the vessel connector 110 are connected, the heating element 104 is activated to heat the liquid within the vessel 102. To connect the electrical contacts of the vessel 102 and the base 106, the kettle 100 further comprises an electrical switch 112.

The kettle 100 further comprises a support frame that is configured to pivotably connect the vessel 102 with the base 106. By pivoting the vessel 102 relative to the base 106, liquid within the vessel 102 can flow through an opening 116 at a top portion of the vessel 102. In this regard, the vessel 102 further comprises a spout 118 projecting from the opening 116 and a lid 120 for closing the opening 116. In this example, the vessel 102 has a substantially cylindrical shape with a relatively large opening 116 that expands across a substantial cross section of the vessel 102. Providing such a large opening 116 has the advantage that access to the inside of the vessel 102 can be enabled, for example for cleaning purposes.

The vessel 102 further has a handle 122 for holding and pivoting the vessel 102. In this example as shown in the accompanying drawings, the handle 122 has two handle portions. The first handle portion 124 attaches to substantially opposite sides of the vessel 102 and curves outwardly around and across a top portion of the vessel 102. A central portion of the first handle portion 124 extends in a substantially horizontal line. In this way, a person can grasp the handle 122 from above. Even more so, the handle 122 may improve pivoting of the vessel 102.

The second handle portion 126 attaches to the first handle portion 124 and to a lower portion of the vessel 102. The second handle portion 126 curves outwardly along a side of the vessel 102. In this way, a person can grasp the handle 122 from the side.

Referring now in more detail to the feature of the base connector 108, as mentioned above the base connector 108 is moveable between an engaged position and a disengaged position. In the engaged position, the base connector 108 engages with the vessel connector 110. Only in this position, the electrical contacts of the base connector 108 and the vessel connector 110 can be connected via the switch 112 to activate the heating element 104. In the example shown in the accompanying drawings, the vessel connector 110 comprises a receptacle 128 for receiving the base connector 108 which is in the form of a plug. This arrangement has the advantage that when the base connector 108 is positioned within the receptacle 128 of the vessel connector 110, pivotal movement of the vessel 102 is restricted. Thus, the risk of accidental spillage of hot liquid can be reduced or even avoided.

In this example, the kettle 100 is configured such that the base connector 108 automatically returns to the engaged position. In other words, the engaged position defines the normal position and a force needs to be applied to move the base connector 108 from the engaged position to the disengaged position. In this regard, the base 106 comprises a spring 130 that is arranged such that the spring 130 is compressed when the base connector 108 is moved from the engaged position to the disengaged position. The base 106 further comprises a magnet 132 that can be activated to hold the base connector 108 in the disengaged, spring-loaded position. The magnet 132 may be activated automatically when the base connector 108 is moved to the disengaged position. In a specific embodiment, the base 106 comprises a timer (not shown) to activate the magnet 132 for a predefined period of time such that the base connector 108 automatically returns to the engaged position at the end of the predefined period of time. In this example, the predefined period of time is between approximately 20 and 30 seconds. However, a person skilled in the art will appreciate that other predefined periods of time are envisaged, including but not limited to between 5 seconds and 1 minute, or between 10 seconds and 45 seconds, or between 20 seconds and 30 seconds, or approximately 10 seconds, or approximately 20 seconds or approximately 30 seconds.

To move the base connector 108 from the engaged position to the disengaged position, a force needs to be applied. This may be implemented mechanically or electronically. In this example as shown in Figures 1 to 12, the base 106 comprises a handle 134 to facilitate manually moving the base connector 108 from the engaged position to the disengaged position. The handle 134 is in the form of a ring that extends around the base 106 and that is connected to the base connector 108 via a plurality of spokes 136. Thus, when the ring 134 is pushed in a downwards direction, the base connector 108 also moves downwards from the engaged position to the spring-loaded disengaged position. Once the ring 134 is pushed down, the magnet 132 is activated to maintain the base connector 108 in its position as described above. During this time, the vessel 102 may be pivoted to pour liquid.

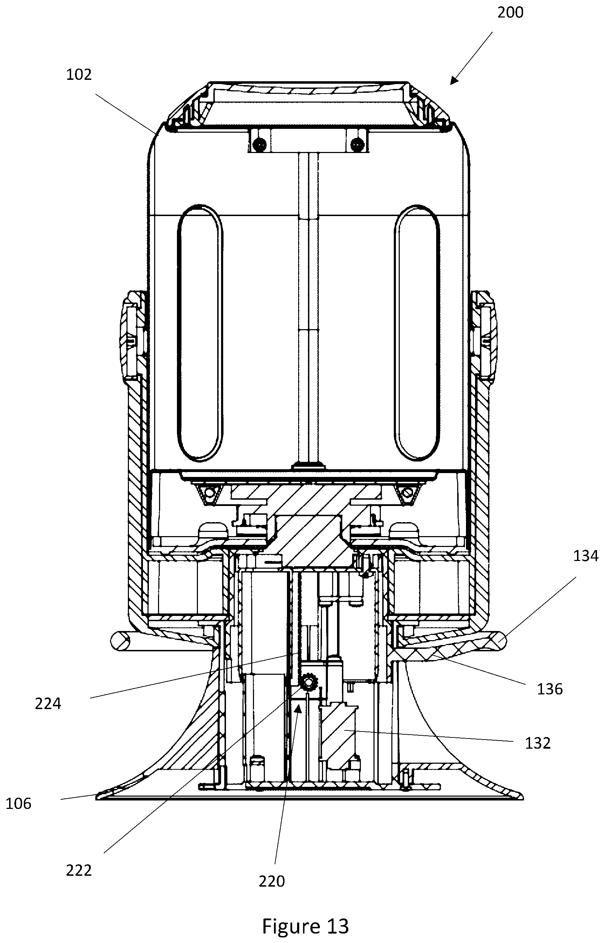

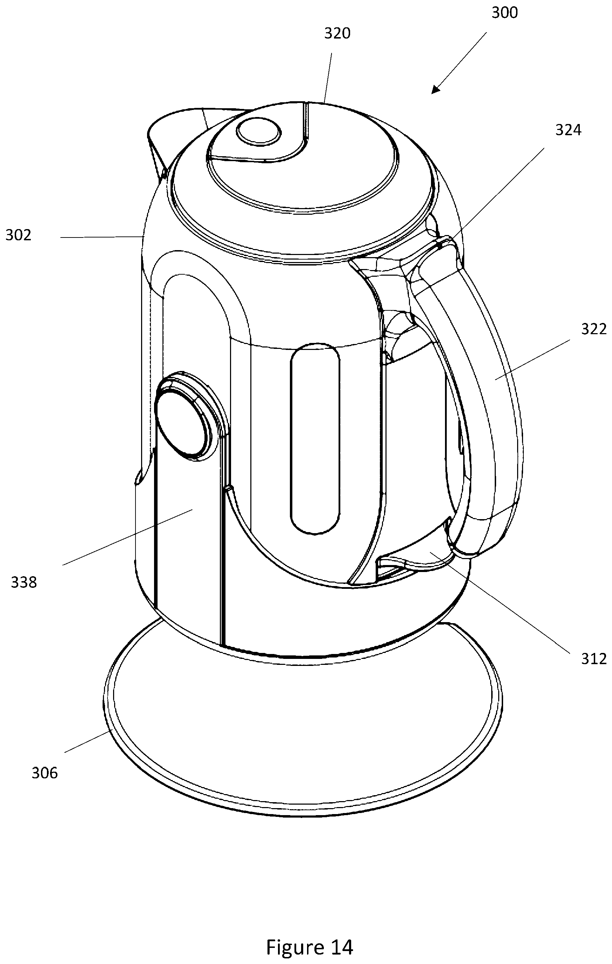

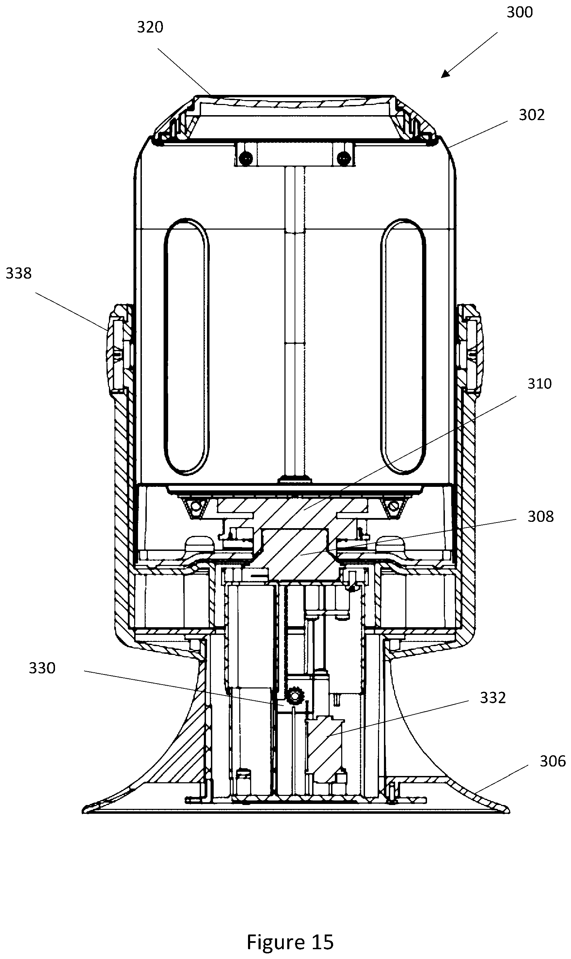

The base 106 may further comprise a damping element for slowing down the movement of the base connector 108 from the disengaged position to the engaged position. An exemplary damping element is illustrated in Figure 13 in which a kettle 200 is shown in accordance with a second embodiment of the present invention. It should be noted that in this Figure, like numerals represent like features as described and shown with reference to the kettle 100. In this example, the damping element is in the form of a mechanical rotary damper 220. Specifically, the rotary damper 220 comprises a gear-like body 222 that is configured to move on a drive track 224 having corresponding teeth. In this way, movement of the base connector 108 from the disengaged position to the engaged position can be limited and thereby slowed down. This has the particular advantage that a smooth controlled movement of the base connector 108 can be achieved. A person skilled in the art will appreciate that other mechanical or electrical damping elements are envisaged as, for example, described with reference to Figures 14 and 15 below.

In the example shown in Figures 1 to 12, the kettle 100 further comprises a support frame 138 that has the function to pivotably connect the vessel 102 with the base 106. As shown in particular in Figures 6 to 9, the support frame 138 comprises two frame parts, a first frame part 140 connected to the base 106 and a second frame part 142 connected to the vessel 102.

The first frame part 140 comprises a base member 144 and a pair of substantially opposite support members 146 that extend from the base member 144. The first frame part 142 is connected to the base 106 via the base member 144. The second frame part 140 also comprises a base member 148 and a pair of support members 150 extending from the base member 148. The second frame part 140 is configured to support and connect to the vessel 102.

In this example, the second frame part 142 is pivotably connected to the first frame part 140 at joints 152 defining pivot points and a pivot axis that extends between the joints 152. The joints 152 are located at end portions of each support member 146, 150. A positive connection is formed between the first and second frame parts 140, 142 and a protective cap 154 may be provided for each joint 152 to protect and cover any movable parts of the joints 152. As shown in the drawings, the pivot axis extends through a central portion of the vessel 102, such as the centre of gravity of the vessel 102. This has the advantage that pivoting of the vessel 102 may be simplified, in particular when the vessel 102 is filled to its maximum.

The second frame part 142 is pivotable relative to the first frame part 140 between a first position and a second position. The first position is shown, for example, in Figures 1 to 3. In the first position, the base members 144, 148 of the first and second frame parts 140, 142 partly overlap in a way so that central apertures 156, 158 of the base members 144, 148 are aligned. The central apertures 156, 158 are provided so that the base connector 108 can move through the aligned apertures 156, 158 to engage with the vessel connector 110. This may also function as an additional safety feature in that if part of the base connector 108 extends into the aperture 158 of the second frame part 142 pivotal movement of the vessel 102 is restricted.

Each base member 144, 148 of the frame parts 140, 142 comprises a wall portion 160, 162 and the support frame 138 is configured such that when the second frame part 142 is in the first position, the wall portions 160, 162 of the first and second frame parts 140, 142 form a rim enclosing a circumference of the vessel 102. A person skilled in the art will appreciate that the rim may only partly enclose the vessel 102.

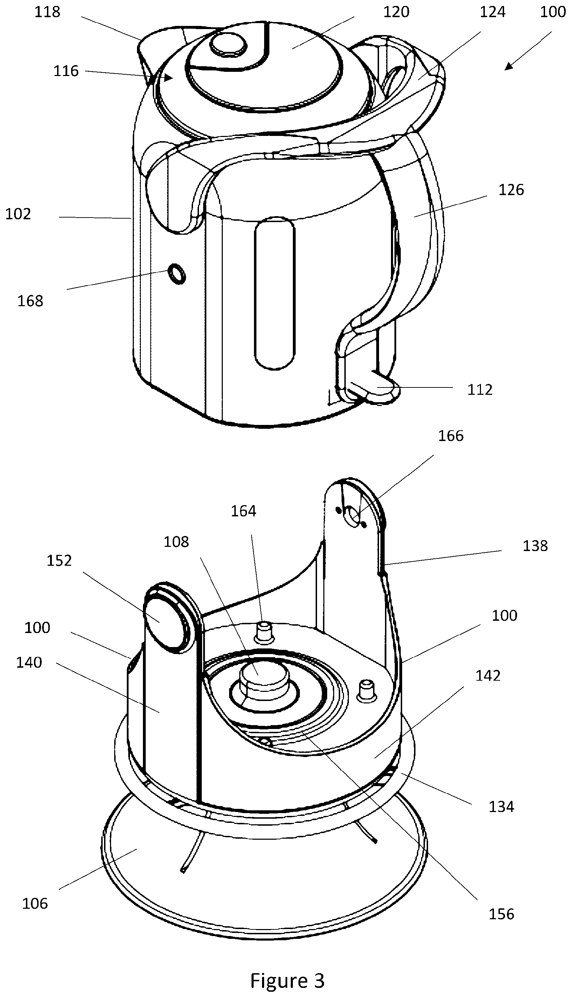

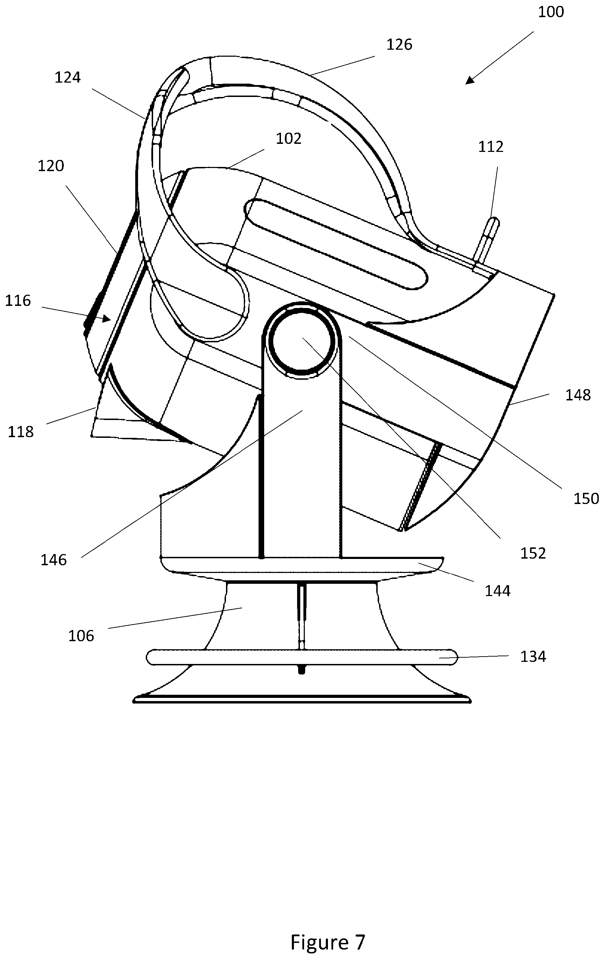

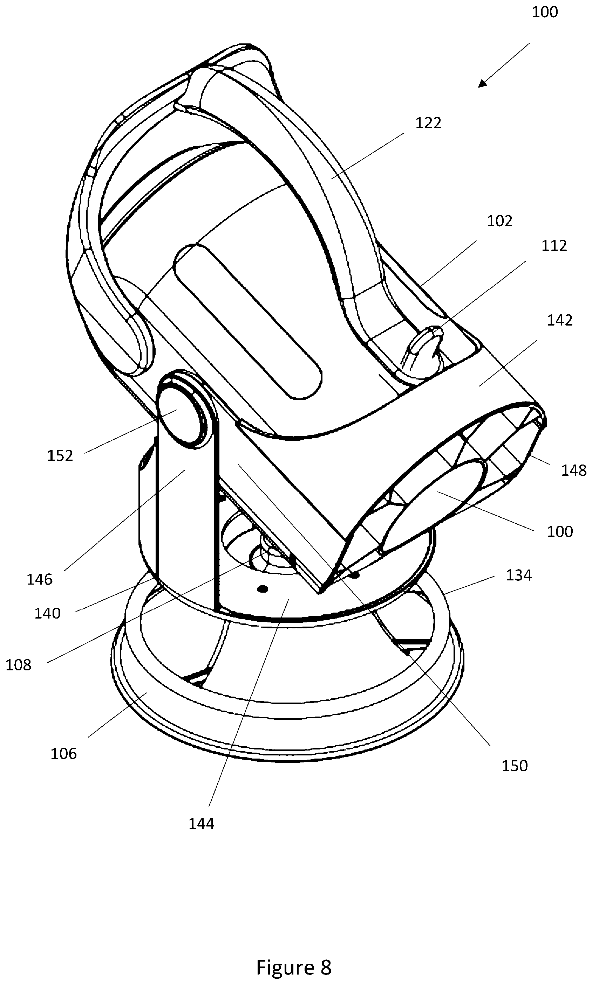

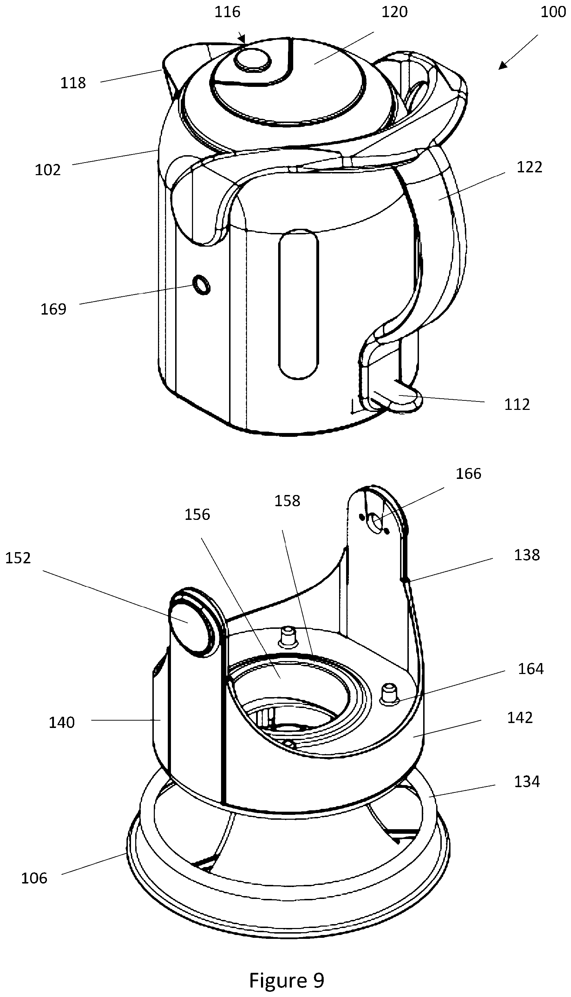

The second position of the second frame part 142 is, for example, shown in Figures 7 and 8. In the second position, the vessel 102 is pivoted relative to the base 106 and the base members 144, 148 of the first and second frame parts 140, 142 are spaced apart from each other. Only the second frame part 142 is supporting and holding the vessel 102. In this regard, the vessel 102 is removably attachable to the second frame part 142 so that the vessel 102 can be removed, for example, for cleaning purposes or to fill the vessel 102 with liquid. It may be sufficient to provide the base member 148 and the supporting members 150 for supporting the vessel. However, in this example, the kettle 100 further comprises a snap fit connection and a plurality of support elements 164. These are shown in particular in Figures 3 and 9.

The snap fit connection is realised by a pair of substantially opposite recesses 166 that are located at end portions of the support members 150 of the second frame part 142. The pair of recesses 166 are arranged to receive a respective pair of protrusions 168 that are positioned at an outside surface of the vessel 102. In this example, the snap fit connection aligns with the pivot axis. However, a person skilled in the art will appreciate that other suitable locations of the snap fit connection are envisaged.

The second frame part 144 further comprises a plurality of support elements 164 that protrude from the base member 148. The support elements 164 are arranged to be received within respective recesses at a bottom portion of the vessel 102. This ensures that the bottom portion of the vessel 102 does not slide off the second frame part 142 when the vessel 102 is pivoted.

A person skilled in the art will appreciate that other suitable connection for removably attaching the vessel 102 to the second frame part 142 are envisaged.

Referring now to Figure 14 and 15, there is shown a kettle 300 in accordance with a third embodiment of the present invention. The kettle 300 also comprises a vessel 302 and a base 306 with a base connector 308. The vessel 302 is pivotably connected to the base 306 via a support frame 338 which functions in the same way as support frame 138 of the kettle 100.

Similar to the operation of the kettle 100 described above, the base connector 308 of the kettle 300 is moveable between an engaged position (as shown in Figure 15) and a disengaged position (not shown). However, movement of the base connector 308 between the engaged position and the disengaged position is carried out electronically. As such, the kettle 300 does not require a handle for manually moving the base connector 308. Rather, movement of the base connector 308 is automatic upon activating of an electric switch 312.

For example, upon activating the electric switch 312 of the kettle 300, a motor 330 of the kettle 300 causes the base connector 308 (in its normal engaged position) to connect with the vessel connector 310. In this way, the heating element (not shown) of the kettle 300 is activated to heat the liquid within the vessel 302. Once the liquid has reached a predefined temperature, such as boiling point, the motor 330 may be configured to automatically turn off the heating element, move the base connector 308 from the engaged position to the disengaged position and activate the magnet 332 to maintain the base connector 308 in the disengaged position. In this regard, the kettle 300 may comprise a temperature sensor (not shown) that is in electronic communication with the motor 330.

The motor 330 may be configured to maintain the base connector 308 in the disengaged position for a predetermined time period. For example, the motor 330 may be configured to activate the magnet 332 for a time period ranging from 1 to 4 minutes, or in particular from 1 to 2 minutes, or in particular for approximately 30 seconds, 1 minute, 90 seconds or 2 minutes. After the predetermined period of time, the motor 330 may be configured to cause the base connector 308 to return to the engaged position. A person skilled in the art will appreciate that movement of the base connector may be in a controlled way, such as damped. In this regard, the kettle 300 may further comprise a damping element or the dampening function may be incorporated within the motor 330.

Alternatively, the disengaged position of the base connector 308 may define the normal position. In this regard, upon activating the electric switch 312 the motor 330 may cause the base connector 308 to move from the disengaged position to the engaged position and activate the heating element. Once the liquid within the vessel 302 has reached the predefined temperature, the motor 330 may be configured to move the base connector 308 to the disengaged position.

Referring back to Figures 14 and 15, it can be seen that the kettle 300 also comprises a handle 322. In this example, the handle 322 comprises a portion that extends along a side of the kettle 300 and a protrusion 324 located at a top portion of the handle in relatively close proximity to a lid of the vessel 302. The protrusion 324 may facilitate pivoting of the vessel 302 by manually pushing against the protrusion 324, for example, by using a finger or thumb.

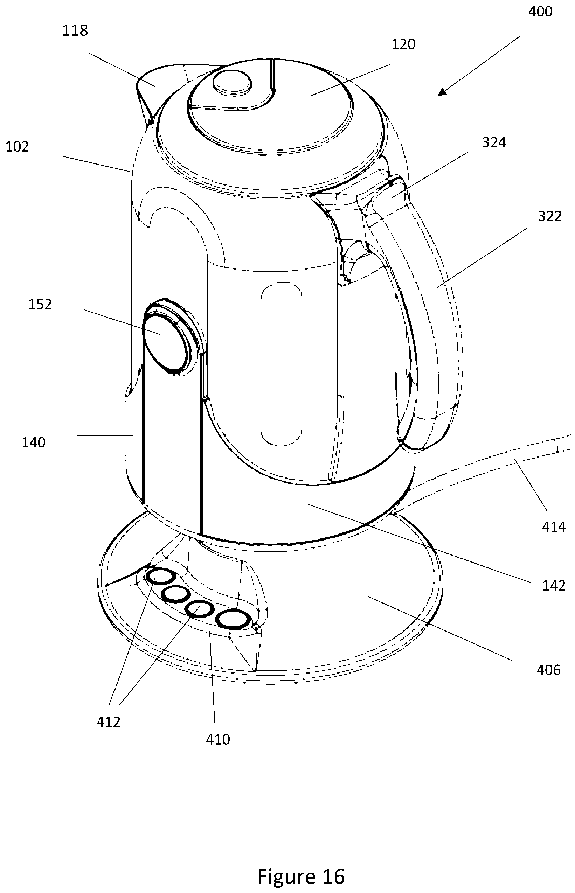

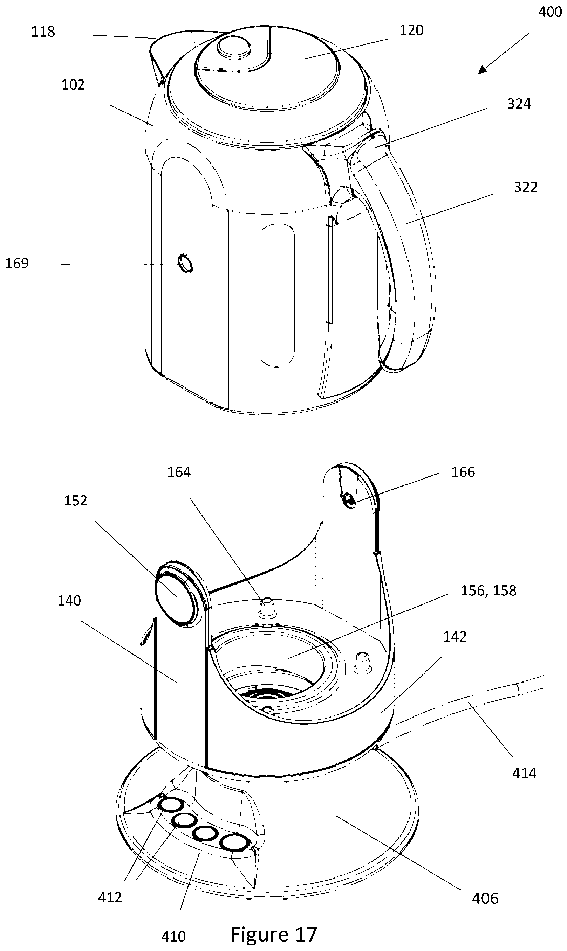

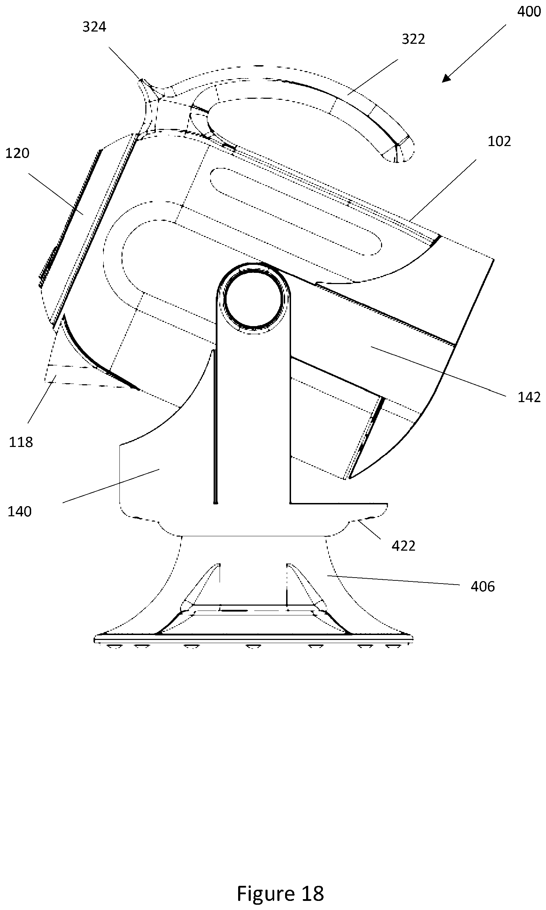

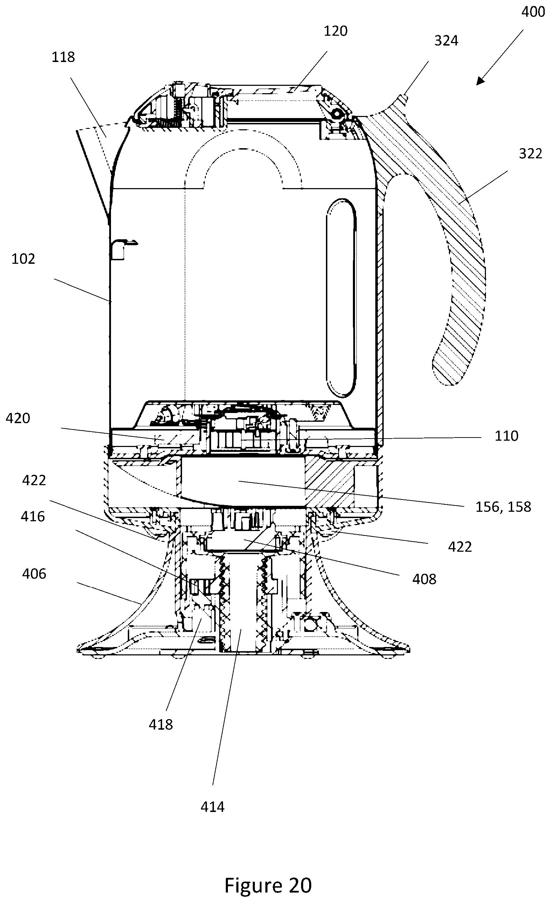

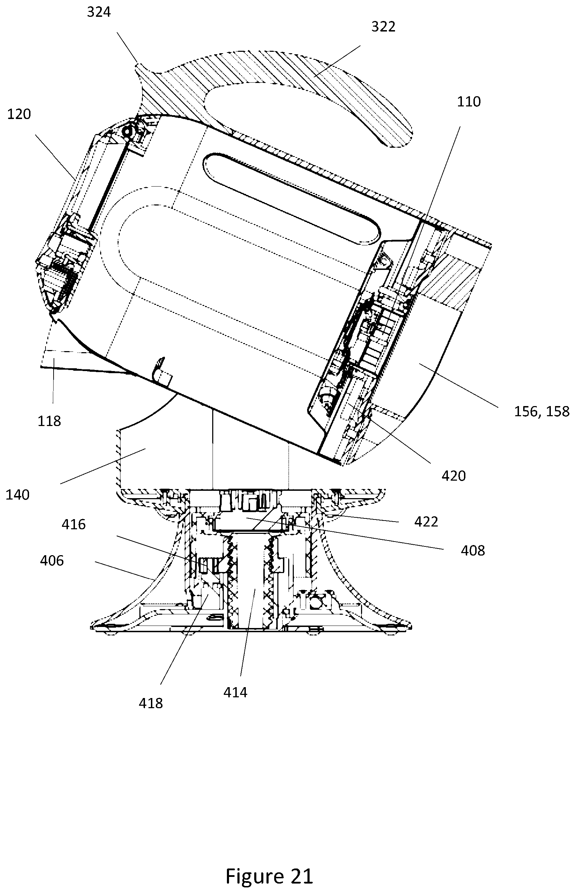

Referring now to Figures 16 to 21, there is shown a kettle 400 in accordance with a further embodiment of the present invention. It should be noted that in these Figures, like numerals represent like features as described and shown with reference to the kettle 100. These features will not be described in detail and we refer to the detailed description of the kettle 100.

The kettle 400 in this example is also an electric kettle for heating and/or boiling liquid, such as water. The kettle 400 comprises a vessel 102 for holding liquid. The vessel 102 of kettle 400 has a similar configuration as the vessel 102 of the kettle 100 in that the vessel 102 comprises a spout 118, a lid 120 and a heating element (not shown) for heating the liquid. The vessel 102 further comprises a handle 322 that is similar to the handle 322 of kettle 300 shown in Figures 14 and 15. In particular, the handle 322 comprises a protrusion 324 that is located at a top portion of the handle 322. The protrusion 324 is in relatively close proximity to the lid 120 and configured to facilitate pivoting of the vessel 102 by manually pushing against the protrusion 324.

The kettle 400 further comprises a power base 406 with a base connector 408 that can be brought in electrical contact with a vessel connector 110 of the vessel 102. Similar as kettle 100, the vessel 102 is pivotably connected to the base 406 via a two-part support frame 140, 142 which functions in the same way as support frame 138 of the kettle 100.

The kettle 400 is different compared to kettle 100 in that the vessel 102 does not comprise a switch for activating the heating element in the vessel 102. In contrast, the power base 406 comprises a control panel 410 including a plurality of push buttons 412 for controlling functions of the kettle 400. A person skilled in the art will appreciate that the power base 406 may comprise any suitable control element, such as a switch for simply switching the kettle on and off. In this example, the control panel 410 is configured to facilitate input from a user by virtue of four push buttons 412. Alternatively (not shown), the power panel may comprise a combined input-/output-device, such as a touch screen, so that in addition to the input from a user, any suitable information may be displayed. For example, a current temperature or timer may be displayed. In general, the kettle 400 may be configured such that any suitable function of the kettle 400 may be controlled by the control panel 410. For example, the kettle 400 may facilitate a user to set a timer, a temperature, a number of cups to be filled or any other suitable function. In one example, the control panel 410 may facilitate a user to set an automatic schedule for heating liquid in the vessel 102, for example, each morning to heat water for tea or coffee.

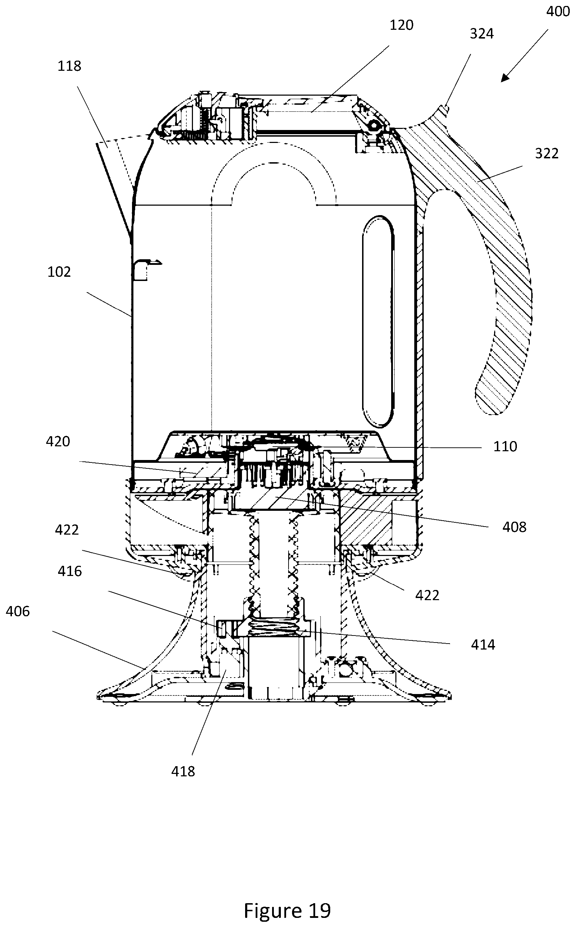

The power base 406 further comprises a base connector 408 with an electrical contact that is connectable to a power source, for example via cable 414. The base connector 408 is moveable between an engaged and a disengaged position. In the engaged position as illustrated in Figure 19, the base connector 408 engages with the vessel connector 110 and the electrical contacts can be connected to activate the heating element (not shown).

The kettle 400 is configured such that by operating the control element of the power base 406, such as one of the buttons 412, the base connector 408 automatically moves from the disengaged position to the engaged position. In this example, the base connector 408 is supported by a threaded shaft 414 that can be raised and lowered via a gear 416. The power base 406 further comprises a motor 418 that when activated rotates the gear 416 thereby raising or lowering the base connector 408 between the disengaged position to the engaged position. Once the base connector 408 engages with the vessel connector 110, the motor 418 may automatically activate the heating element. In this way, the kettle 400 can be activated by the touch of a button. Once the liquid has reached a predefined temperature, the motor 418 may be configured to automatically turn off the heating element, and move the base connector 408 from the engaged position to the disengaged position.

The kettle 400 in this example has the advantage that any control elements that require power are provided in the power base 406. There is no need to provide a switch at the vessel 102 which has the advantage that a relatively low-cost vessel 102 may be provided. Even more so, the vessel 102 may be replaced if needed or desired.

In this example, the kettle 400 has a central vertical axis and is configured such that the vessel 102 is rotatable about the central axis relative to the base 406. This provides the advantage that liquid within the vessel 102 can be poured in different directions without the need to lift the vessel 102 off the base 406. Rather, the vessel 102 can be swivelled about the central axis and multiple containers arranged around the base 406 can be filled. In a specific example, the vessel 102 may be rotatable about 360 degrees. However, a person skilled in the art will appreciate that a limited range of rotation is envisaged, including but not limited to 90 degrees, 180 degrees or 270 degrees. The feature of the rotatable vessel 102 may be realised in that the first frame part 140 of the support frame 138 be rotatable relative to the base 406.

The kettle 400 may further comprises one or more light source. The light source may be configured to emit light of one or more wavelengths or wavelength ranges, for example, to provide light of different colours. In this particular example, the kettle 400 comprises a first light source (not shown) that is configured to illuminate the liquid within the vessel 102. The first light source may, for example, comprise one or more LEDs. In the example of having a plurality of LEDs, the LEDs may emit light of different wavelengths and individual LEDs may be selectively activated, such as LEDs of one colour. The kettle 400 may be configured to change a wavelength of the emitted light based on a detected temperature of the liquid within the vessel 102. For example, the emitted light from the first light source may change from a blue colour indicative of relatively cold liquid to a red colour indicative of a relatively hot liquid. In this regard, the kettle 400 may comprise a temperature sensor located within the vessel 102 to detect a temperature of the liquid.

In this example, the vessel 102 further comprises a power source, such as battery 420, for providing power to the first light source. This is particularly advantageous when the base connector 408 is in the disengaged position and therefore no power is transmitted from the base 406 to the vessel 102. For example, when the base connector 408 moves from the engaged position to the disengaged position, the kettle 400 may be configured to change the power supply for the first light source to the battery 420. However, a person skilled in the art will appreciate that the light source may solely be powered by the battery 420. Additionally, the kettle 400 may be configured to change the colour of the emitted light once the base connector 408 moves from the engaged to the disengaged position. For example, the colour of the first light source may change from red to white indicating that the base connector 408 is disconnected and the vessel 102 can be pivoted for pouring. Illuminating the liquid within the vessel 102 after the base connector 408 has moved into the disengaged position has the advantage that the liquid can be illuminated while pouring the liquid through the spout 118. This is particularly advantageous for users with vision impairment or other disabilities as it may be more apparent that possibly hot liquid is being poured.

In this example, the kettle 400 further comprises a second light source 422 configured to direct light on a defined surface area in close proximity to the power base 406. In this example, the second light source 422 is positioned at the power base 406 in the form of a ring with a plurality of LEDs. Individual LEDs or groups of LEDs may be selectively activated. In this way, light from the plurality of LEDs may be directed to form one or more defined surface areas that are illuminated to indicate positions for receiving liquid when the vessel 102 is pivoted to pour the liquid through the spout 118. In a specific example, the kettle 400 is configured to direct light onto a surface to form one or more light spots or rings to define positions for containers, such as cups or glasses. This is particularly advantageous for visually impaired users in that cups may be positioned on the light spots to ensure that the heated liquid is poured into the containers without spilling. While the kettle 400 in this example comprises both a first light source provided in the vessel 102 and a second light source 422 at the power base 406, a person skilled in the art will appreciate that none or any other suitable number of light sources may be provided.

| | | | | | |
|---|---|---|---|---|---|
| List **of numerals** | | 144 | base member (first frame part) | 222 | gear-like body |
| | | | | 224 | drive track |
| 100 | kettle | 146 | pair of support members (first frame part) | 300 | kettle |
| 102 | vessel | | | 302 | vessel |
| 104 | heating element | | | | |
| 106 | base | 148 | base member (second frame part) | 306 | base |
| 108 | base connector | | | 308 | connector |
| 110 | vessel connector | 150 | pair of support members (second frame part) | 312 | electric switch |
| 112 | electric switch | | | 318 | spout |
| 116 | opening | | | 324 | handle |
| 118 | spout | 152 | joints | 330 | motor |
| 120 | lid | 154 | protective cap | 332 | magnet |
| 122 | handle | 156 | aperture (first frame part) | 338 | support frame |
| 124 | first handle portion | | | 400 | kettle |
| 126 | second handle portion | 158 | aperture (second frame part) | 406 | base |
| | | | | 408 | base connector |
| 128 | receptacle | 160 | wall portion (first frame part) | 410 | control panel |
| 130 | spring | | | 412 | push buttons |
| 132 | magnet | 162 | wall portion (second frame part) | 414 | threaded shaft |
| 134 | handle (base) | | | | |
| 136 | spokes | 164 | support elements | 416 | gear |
| 138 | support frame | 166 | recesses | 418 | motor |
| 140 | first frame part | 168 | protrusions | 420 | battery |
| 142 | second frame part | 200 | kettle | 422 | second light source |
| | | 220 | rotary damper | | |

## Claims

1. A kettle (100) for heating liquid, the kettle (100) comprising:
a base (106) comprising a base connector (108) with an electrical contact that is connectable to a power source,
a vessel (102) for holding the liquid and comprising a heating element (104) for heating the liquid, the vessel (102) further comprising a vessel connector (110) with an electrical contact connected to the heating element (104), and
a support frame (138) for pivotably connecting the vessel (102) with the base (106) such that by pivoting the vessel (102) relative to the base (106), liquid in the vessel (102) flows through an opening (116) located at a top portion of the vessel (102),
wherein
the support frame (138) comprises first and second frame parts (140, 142) that are pivotable relative to each other about a pivot axis, the first frame part (140) being connected to the base (106) and the second frame part (142) being connected to the vessel (102); and
the base connector (108) of the base (106) is moveable relative to the base (106) between an engaged position and a disengaged position such that when the base connector (108) is in the engaged position, the base connector (108) engages with the vessel connector (110) such that the electrical contacts of the base (106) and the vessel (102) can be connected to activate the heating element (104), and when the base connector (108) is in the disengaged position, the vessel (102) is pivotable relative to the base (106) for pouring the liquid through the opening (116) of the vessel (102),
**characterised in that**
the kettle (100) is configured such that when the base connector (108) is in the engaged position, pivotal movement of the vessel (102) is restricted.

2. The kettle (100) of claim 1 wherein the kettle (100) comprises a motor (330) for electrically moving the base connector (108) between the disengaged position and the engaged position.

3. The kettle (100) of any one of claims 1 to 2, wherein the kettle (100) is configured such that force needs to be applied to move the base connector (108) from the engaged position to the disengaged position and that the base connector (108) automatically returns to the engaged position.

4. The kettle (100) of any one of claims 1 to 3, wherein the kettle (100) is configured such that the pivot axis extends through a centre of gravity of the vessel (102).

5. The kettle (100) of claim 4, wherein each frame part (140, 142) comprises a base member (144, 148) and a pair of substantially opposite support members (146, 150) extending from the base member (144, 148), wherein the pair of support members (150) of the second frame part is pivotably connected to the pair of support members (146) of the first frame part.

6. The kettle (100) of claim 5, wherein the second frame part (142) is pivotable relative to the first frame part (140) between a first position in which the base members (144, 148) of the first and second frame parts at least partly overlap and a second position in which the base member (148) of the second frame part is spaced relative to the base member (144) of the first frame part and the vessel (102) is pivoted relative to the base (106).

7. The kettle (100) of claim 6, wherein each base part (144, 148) of the first and second frame parts comprises an aperture (156, 158) and wherein the kettle (100) is configured such when the second frame part (142) is in the first position, the apertures (156, 158) of the base parts of the first and second frame parts align such that the base connector (108) can move through the apertures to engage with the vessel connector (110).

8. The kettle (100) of any one of claims 1 to 7, wherein the support frame (138) is configured such that the vessel (102) is removable from the support frame (138).

9. The kettle (100) of any one of the preceding claims, wherein the kettle (100) has a central vertical axis and is configured such that the vessel (102) is rotatable about the central axis relative to the base (106).

10. The kettle (100) of any one of the preceding claims, wherein the kettle (100) comprises an electrical switch (312) for connecting the electrical contacts of the vessel (102) and the base (106) to activate the heating element (104) in the vessel (102), the heating element (104) being incorporated within a wall portion of the vessel (102).

11. The kettle (100) of any one of the preceding claims, wherein the vessel (102) comprises a handle (122) for holding the vessel (102), wherein the handle (122) comprises a protrusion located at a top portion of the handle (122) that is configured to facilitate pivoting of the vessel (102) by manually pushing against the protrusion.

12. The kettle (100) of any one of the preceding claims, comprising a temperature sensor for sensing a temperature of liquid within the vessel (102), and a light source for emitting light, wherein a frequency of the emitted light is selected based on the sensed temperature of the liquid within the vessel (102).

13. The kettle (100) of any one of the preceding claims, comprising a light source for emitting light onto at least one defined surface area in proximity of the base (106), wherein the at least one defined surface area is indicative of a position receiving liquid when the vessel (102) is pivoted to pour liquid through the opening of the vessel (102).

14. The kettle (100) of any one of the preceding claims, wherein the vessel (102) comprises a light source for illuminating liquid within the vessel (102) and a battery for powering the light source, wherein the kettle (100) is configured such that when the base connector (108) is in the disengaged position the light source is powered by the battery.

## Patentansprüche

1. Wasserkocher (100) zum Erhitzen von Flüssigkeit, wobei der Wasserkocher (100) umfasst:
einen Sockel (106), der einen Sockelanschluss (108) mit einem elektrischen Kontakt umfasst, der an eine Stromquelle anschließbar ist,
einen Behälter (102) zur Aufnahme der Flüssigkeit, der ein Heizelement (104) zum Erhitzen der Flüssigkeit umfasst, wobei der Behälter (102) ferner einen Behälteranschluss (110) mit einem elektrischen Kontakt umfasst, der mit dem Heizelement (104) verbunden ist, und
einen Stützrahmen (138) zum schwenkbaren Verbinden des Behälters (102) mit dem Sockel (106), derart, dass durch Schwenken des Behälters (102) relativ zu dem Sockel (106) Flüssigkeit in dem Behälter (102) durch eine Öffnung (116) fließt, die sich an einem oberen Abschnitt des Behälters (102) befindet,
wobei der Stützrahmen (138) ein erstes und ein zweites Rahmenteil (140, 142) umfasst, die relativ zueinander um eine Schwenkachse schwenkbar sind, wobei das erste Rahmenteil (140) mit dem Sockel (106) verbunden ist und das zweite Rahmenteil (142) mit dem Behälter (102) verbunden ist; und wobei der Sockelanschluss (108) des Sockels (106) relativ zu dem Sockel (106) zwischen einer Eingriffsposition und einer Ausrückposition bewegbar ist, so dass, wenn sich der Sockelanschluss (108) in der Eingriffsposition befindet, der Sockelanschluss (108) mit dem Behälteranschluss (110) in Eingriff steht, so dass die elektrischen Kontakte des Sockels (106) und des Behälters (102) zum Aktivieren des Heizelements (104) verbindbar sind, und wenn sich der Sockelanschluss (108) in der Ausrückposition befindet, der Behälter (102) relativ zu dem Sockel (106) schwenkbar ist, um die Flüssigkeit durch die Öffnung (116) des Behälters (102) auszugießen,
**dadurch gekennzeichnet, dass** der Wasserkocher (100) so ausgebildet ist, dass, wenn sich der Sockelanschluss (108) in der Eingriffsposition befindet, die Schwenkbewegung des Behälters (102) eingeschränkt ist.

2. Wasserkocher (100) nach Anspruch 1, wobei der Wasserkocher (100) einen Motor (330) umfasst, um den Basisanschluss (108) elektrisch zwischen der Ausrückposition und der Eingriffsposition zu bewegen.

3. Wasserkocher (100) nach einem der Ansprüche 1 bis 2, wobei der Wasserkocher (100) so ausgebildet ist, dass eine Kraft ausgeübt werden muss, um den Sockelanschluss (108) aus der Eingriffsposition in die Ausrückposition zu bewegen, und dass der Sockelanschluss (108) automatisch in die Eingriffsposition zurückkehrt.

4. Wasserkocher (100) nach einem der Ansprüche 1 bis 3, wobei der Wasserkocher (100) so ausgebildet ist, dass sich die Schwenkachse durch einen Schwerpunkt des Behälters (102) erstreckt.

5. Wasserkocher (100) nach Anspruch 4, wobei jedes Rahmenteil (140, 142) ein Basiselement (144, 148) und ein Paar im Wesentlichen gegenüberliegender Stützelemente (146, 150) umfasst, die sich von dem Basiselement (144, 148) erstrecken, wobei das Paar von Stützelementen (150) des zweiten Rahmenteils schwenkbar mit dem Paar von Stützelementen (146) des ersten Rahmenteils verbunden ist.

6. Wasserkocher (100) nach Anspruch 5, wobei das zweite Rahmenteil (142) relativ zu dem ersten Rahmenteil (140) zwischen einer ersten Position, in der sich die Basiselemente (144, 148) des ersten und des zweiten Rahmenteils zumindest teilweise überlappen, und einer zweiten Position, in der das Basiselement (148) des zweiten Rahmenteils relativ zu dem Basiselement (144) des ersten Rahmenteils beabstandet ist und der Behälter (102) relativ zu dem Sockel (106) geschwenkt ist, schwenkbar ist.

7. Wasserkocher (100) nach Anspruch 6, wobei jedes Basiselement (144, 148) des ersten und zweiten Rahmenteils eine Öffnung (156, 158) aufweist, und wobei der Wasserkocher (100) so ausgebildet ist, dass, wenn sich das zweite Rahmenteil (142) in der ersten Position befindet, die Öffnungen (156, 158) der Basiselemente des ersten und des zweiten Rahmenteils so ausgerichtet sind, dass sich der Sockelanschluss (108) durch die Öffnungen bewegen kann, um mit dem Behälteranschluss (110) in Eingriff zu kommen.

8. Wasserkocher (100) nach einem der Ansprüche 1 bis 7, wobei der Stützrahmen (138) so ausgebildet ist, dass der Behälter (102) von dem Stützrahmen (138) abnehmbar ist.

9. Wasserkocher (100) nach einem der vorstehenden Ansprüche, wobei der Wasserkocher (100) eine zentrale vertikale Achse aufweist und so ausgebildet ist, dass der Behälter (102) relativ zu dem Sockel (106) um die zentrale Achse drehbar ist.

10. Wasserkocher (100) nach einem der vorstehenden Ansprüche, wobei der Wasserkocher (100) einen elektrischen Schalter (312) zum Verbinden der elektrischen Kontakte des Behälters (102) und des Sockels (106) umfasst, um das Heizelement (104) in dem Behälter (102) zu aktivieren, wobei das Heizelement (104) in einen Wandabschnitt des Behälters (102) integriert ist.

11. Wasserkocher (100) nach einem der vorstehenden Ansprüche, wobei der Behälter (102) einen Griff (122) zum Halten des Behälters (102) umfasst, wobei der Griff (122) einen Vorsprung aufweist, der an einem oberen Abschnitt des Griffs (122) angeordnet ist und so ausgebildet ist, dass er das Schwenken des Behälters (102) durch manuelles Drücken gegen den Vorsprung erleichtert.

12. Wasserkocher (100) nach einem der vorstehenden Ansprüche, umfassend einen Temperatursensor zum Erfassen einer Temperatur der Flüssigkeit innerhalb des Behälters (102) und eine Lichtquelle zum Emittieren von Licht, wobei eine Frequenz des emittierten Lichts auf der Grundlage der erfassten Temperatur der Flüssigkeit innerhalb des Behälters (102) ausgewählt wird.

13. Wasserkocher (100) nach einem der vorstehenden Ansprüche, umfassend eine Lichtquelle zum Aussenden von Licht auf mindestens einen definierten Oberflächenbereich in der Nähe des Sockels (106), wobei der mindestens eine definierte Oberflächenbereich eine die Flüssigkeit aufnehmende Position anzeigt, wenn der Behälter (102) verschwenkt ist, um Flüssigkeit durch die Öffnung des Behälters (102) zu gießen.

14. Wasserkocher (100) nach einem der vorstehenden Ansprüche, wobei der Behälter (102) eine Lichtquelle zum Beleuchten von Flüssigkeit innerhalb des Behälters (102) und eine Batterie zum Versorgen der Lichtquelle mit Strom umfasst, wobei der Wasserkocher (100) so ausgebildet ist, dass, wenn sich der Basisanschluss (108) in der Ausrückposition befindet, die Lichtquelle von der Batterie mit Strom versorgt wird.

## Revendications

1. Bouilloire (100) destinée à chauffer un liquide, la bouilloire (100) comprenant :
une base (106) comprenant un connecteur de base (108) muni d'un contact électrique pouvant être connecté à une source d'alimentation,
un récipient (102) destiné à contenir le liquide et comprenant un élément chauffant (104) destiné à chauffer le liquide, le récipient (102) comprenant en outre un connecteur de récipient (110) muni d'un contact électrique relié à l'élément chauffant (104), et
un cadre de support (138) destiné à relier de manière pivotante le récipient (102) à la base (106) de telle sorte que, en faisant pivoter le récipient (102) par rapport à la base (106), le liquide contenu dans le récipient (102) s'écoule à travers une ouverture (116) située au niveau d'une partie supérieure du récipient (102),
dans laquelle le cadre de support (138) comprend des première et deuxième parties de cadre (140, 142) qui peuvent pivoter l'une par rapport à l'autre autour d'un axe de pivotement, la première partie de cadre (140) étant reliée à la base (106) et la deuxième partie de cadre (142) étant reliée au récipient (102) ; et
dans laquelle le connecteur de base (108) de la base (106) est mobile par rapport à la base (106) entre une position engagée et une position désengagée, de telle sorte que lorsque le connecteur de base (108) est en position engagée, le connecteur de base (108) s'engage avec le connecteur de récipient (110) de telle sorte que les contacts électriques de la base (106) et du récipient (102) puissent être connectés pour activer l'élément chauffant (104), et que lorsque le connecteur de base (108) est en position désengagée, le récipient (102) puisse pivoter par rapport à la base (106) pour verser le liquide à travers l'ouverture (116) du récipient (102), **caractérisée en ce que** la bouilloire (100) est configurée de telle sorte que, lorsque le connecteur de la base (108) est en position engagée, le mouvement de pivotement du récipient (102) est limité.

2. Bouilloire (100) selon la revendication 1, dans laquelle la bouilloire (100) comprend un moteur (330) destiné à déplacer électriquement le connecteur de base (108) entre la position désengagée et la position engagée.

3. Bouilloire (100) selon l'une quelconque des revendications 1 à 2, dans laquelle la bouilloire (100) est configurée de telle sorte qu'une force doit être appliquée pour déplacer le connecteur de base (108) de la position engagée à la position désengagée, et que le connecteur de base (108) revient automatiquement à la position engagée.

4. Bouilloire (100) selon l'une quelconque des revendications 1 à 3, dans laquelle la bouilloire (100) est configurée de telle sorte que l'axe de pivotement passe par un centre de gravité du récipient (102).

5. Bouilloire (100) selon la revendication 4, dans laquelle chaque partie de cadre (140, 142) comprend un élément de base (144, 148) et une paire d'éléments de support (146, 150) sensiblement opposés s'étendant à partir de l'élément de base (144, 148), dans laquelle la paire d'éléments de support (150) de la deuxième partie de cadre est reliée de manière pivotante à la paire d'éléments de support (146) de la première partie de cadre.

6. Bouilloire (100) selon la revendication 5, dans laquelle la deuxième partie de cadre (142) peut pivoter par rapport à la première partie de cadre (140) entre une première position dans laquelle les éléments de base (144, 148) des première et deuxième parties de cadre se chevauchent au moins partiellement et une deuxième position dans laquelle l'élément de base (148) de la deuxième partie de cadre est espacé par rapport à l'élément de base (144) de la première partie de cadre et le récipient (102) est pivoté par rapport à la base (106).

7. Bouilloire (100) selon la revendication 6, dans laquelle chaque élément de base (144, 148) des première et deuxième parties de cadre comprend une ouverture (156, 158), et dans laquelle la bouilloire (100) est configurée de telle sorte que, lorsque la deuxième partie de cadre (142) se trouve dans la première position, les ouvertures (156, 158) des éléments de base des première et deuxième parties de cadre s'alignent de manière à ce que le connecteur de base (108) puisse se déplacer à travers les ouvertures pour s'engager avec le connecteur de récipient (110).

8. Bouilloire (100) selon l'une quelconque des revendications 1 à 7, dans laquelle le cadre de support (138) est configuré de telle sorte que le récipient (102) puisse être retiré du cadre de support (138).

9. Bouilloire (100) selon l'une quelconque des revendications précédentes, dans laquelle la bouilloire (100) présente un axe vertical central et est configurée de telle sorte que le récipient (102) puisse tourner autour de l'axe central par rapport à la base (106).

10. Bouilloire (100) selon l'une quelconque des revendications précédentes, dans laquelle la bouilloire (100) comprend un interrupteur électrique (312) destiné à connecter les contacts électriques du récipient (102) et de la base (106) afin d'activer l'élément chauffant (104) dans le récipient (102), l'élément chauffant (104) étant incorporé dans une partie de la paroi du récipient (102).

11. Bouilloire (100) selon l'une quelconque des revendications précédentes, dans laquelle le récipient (102) comprend une poignée (122) destinée à tenir le récipient (102), dans laquelle la poignée (122) comprend une saillie située au niveau d'une partie supérieure de la poignée (122) qui est configurée pour faciliter le pivotement du récipient (102) en poussant manuellement contre la saillie.

12. Bouilloire (100) selon l'une quelconque des revendications précédentes, comprenant un capteur de température destiné à détecter la température d'un liquide à l'intérieur du récipient (102), et une source lumineuse destinée à émettre de la lumière, dans laquelle la fréquence de la lumière émise est sélectionnée en fonction de la température détectée du liquide à l'intérieur du récipient (102).

13. Bouilloire (100) selon l'une quelconque des revendications précédentes, comprenant une source lumineuse destinée à émettre de la lumière sur au moins une zone de surface définie à proximité de la base (106), dans laquelle ladite au moins une zone de surface définie indique une position de réception du liquide lorsque le récipient (102) est pivoté pour verser le liquide à travers l'ouverture du récipient (102).

14. Bouilloire (100) selon l'une quelconque des revendications précédentes, dans laquelle le récipient (102) comprend une source lumineuse destinée à éclairer le liquide à l'intérieur du récipient (102) et une batterie destinée à alimenter la source lumineuse, la bouilloire (100) étant configurée de telle sorte que, lorsque le connecteur de base (108) est en position désengagée, la source lumineuse est alimentée par la batterie.
